# EUROPÄISCHE PATENTSCHRIFT

(11) **EP 2 465 892 B1**
(45) Veröffentlichungstag und Bekanntmachung des Hinweises auf die Patenterteilung: **29.04.2015**
(21) Anmeldenummer: 11189690.8
(22) Anmeldetag: 18.11.2011
(51) Int. Cl.: C08G 77/46, C08G 18/61, C08G 18/50, C08J 9/00

(54) **SILICONSTABILISATOREN FÜR POLYURETHAN- ODER POLYISOCYANURAT-HARTSCHAUMSTOFFE**
SILICON STABILISERS FOR POLYURETHANE OR POLYISOCYANURATE RIGID FOAMS
STABILISATEURS À BASE DE SILICONE POUR MOUSSES RIGIDES DE POLYURÉTHANE OU DE POLYISOCYANURATE

(30) Priorität: 16.12.2010 DE 102010063237
(43) Veröffentlichungstag der Anmeldung: 20.06.2012
(73) Patentinhaber: Evonik Degussa GmbH, 45128 Essen (DE)
(72) Erfinder: Schiller, Carsten, Dr., 45470 Mülheim an der Ruhr (DE); Glos, Martin, Dr., 46325 Borken (DE); Eilbracht, Christian, Dr., 44627 Herne (DE)

(56) Entgegenhaltungen:
- CN-A- 101 125 952
- JP-A- 8 092 404
- US-A- 4 052 495
- US-A- 4 136 250
- US-A- 4 797 501
- US-A- 5 169 872
- US-A- 6 071 977

## Beschreibung

Gegenstand der Erfindung sind Polyethersiloxane und deren Verwendung als Schaumstabilisatoren bei der Herstellung von Polyurethan- bzw. Polyisocyanurat-Schaumstoffen, insbesondere Hartschaumstoffen, welche besonders vorteilhafte Gebrauchseigenschaften, wie niedrige Wärmeleitfähigkeit und insbesondere eine gute Oberflächenqualität, bieten.

Bei der Herstellung von Polyurethan- und Polyisocyanurat-Hartschaumstoffen werden zellstabilisierende Additive eingesetzt, welche für eine feinzellige, gleichmäßige und störungsarme Schaumstruktur sorgen sollen und damit die Gebrauchseigenschaften, besonders das thermische Isolationsvermögen, des Hartschaumstoffes im wesentlichen Maße positiv beeinflussen. Besonders effektiv sind Tenside auf der Basis von Polyether-modifizierten Siloxanen, welche daher den bevorzugten Typ der Schaumstabilisatoren darstellen.

Da es eine Vielzahl verschiedener Hartschaumformulierungen für unterschiedliche Anwendungsgebiete gibt, die individuelle Anforderungen an den Schaumstabilisator stellen, werden Polyethersiloxane unterschiedlicher Struktur eingesetzt. Eines der Auswahlkriterien für den Schaumstabilisator ist dabei das in der Hartschaumformulierung enthaltene Treibmittel.

Verschiedene Veröffentlichungen bezüglich Polyethersiloxan-Schaumstabilisatoren für Hartschaum-Anwendungen wurden bereits publiziert. Die EP 0 570 174 B1 beschreibt ein Polyethersiloxan der Struktur (CH₃)₃SiO [SiO(CH₃)₂]ₓ [SiO(CH₃)R]_{y}Si(CH₃)₃, dessen Reste R aus einem über eine SiC-Bindung an das Siloxan geknüpften Polyethylenoxid bestehen, welches am anderen Kettenende durch eine C₁-C₆ Acylgruppe endverkappt ist. Dieser Schaumstabilisator eignet sich für die Herstellung von Polyurethan-Hartschäumen unter Verwendung von organischen Treibmitteln, insbesondere Fluorchlorkohlenwasserstoffen wie CFC-11.

Die nächste Generation der Fluorchlorkohlenwasserstoff-Treibmittel sind so genannte Hydrochlorfluorkohlenwasserstoffe, wie z. B. HCFC-123. Bei der Verwendung dieser Treibmittel für die Polyurethan-Hartschaum-Herstellung eignen sich laut EP 0 533 202 A1 Polyethersiloxane des Strukturtyps (CH₃)₃SiO[SiO(CH₃)₂]ₓ[SiO(CH₃)R]_{y}Si(CH₃)₃. Die Reste R bestehen hier aus SiC-gebundenen Polyalkylenoxiden, die aus Propylenoxid und Ethylenoxid zusammengesetzt sind und am Kettenende eine Hydroxy-, Methoxy- oder Acyloxyfunktion aufweisen können. Der Mindestanteil an Ethylenoxid im Polyether beträgt dabei 25 Massenprozent.

Die EP 0 877 045 B1 beschreibt für dieses Herstellverfahren analoge Strukturen, die sich durch ein vergleichsweise höheres Molekulargewicht und durch die Kombination zweier Polyethersubstituenten an der Siloxankette von den erstgenannten Schaumstabilisatoren abheben.

Bei der Herstellung von Polyurethan-Hartschäumen mit reinen Fluorkohlenwasserstoffen, wie z. B. Freon, als Treibmittel können laut EP 0 293 125 B1 auch Mischungen unterschiedlicher Stabilisatoren verwendet werden, so zum Beispiel die Kombination eines rein organischen (Siliconfreien) Tensids mit einem Polyethersiloxan.

Die neuere Entwicklung bei der Herstellung von Polyurethan-Hartschäumen besteht darin, ganz auf halogenierte Kohlenwasserstoffe als Treibmittel zu verzichten und stattdessen Kohlenwasserstoffe wie Pentan einzusetzen. So beschreibt die EP 1 544 235 die Herstellung von Polyurethanhartschäumen unter Verwendung von Kohlenwasserstoff-Treibmitteln und Polyethersiloxanen der bereits bekannten Struktur (CH₃)₃SiO[SiO(CH₃)₂]ₓ[SiO(CH₃)R]_{y}Si(CH₃)₃ mit einer Mindestkettenlänge des Siloxans von 60 Monomereinheiten und unterschiedlichen Polyethersubstituenten R, deren Mischungsmolgewicht 450 bis 1000 g/mol beträgt und deren Ethylenoxidanteil bei 70 bis 100 mol % liegt.

In DE 10 2006 030 531 wird die Verwendung von Polyethersiloxanen, bei denen die Endgruppe der Polyether entweder eine freie OH-Gruppe, eine Alkylether-Gruppe (vorzugsweise Methyl) oder ein Ester ist, als Schaumstabilisatoren beschrieben. Als besonders bevorzugt werden solche Polyethersiloxane verwendet, die freie OH-Funktionen aufweisen. Die Verwendung der speziellen Polyethersiloxane soll insbesondere das Brandverhalten postiv beeinflussen.

In US 4,014,825 werden organomodifizierte Siloxane zur Herstellung von Polyurethanschäumen beschrieben, die neben Alkyl- und Polyether-Substituenten noch Seitenketten tragen mit tertiären OH-Gruppen. Es werden hier also zusätzliche Substituenten eingeführt. Die hier eingesetzten Polyether sind meist Methyl-endverschlossen. Generell weisen die Polyether keine spezielle Anordnung der Alkylenoxid-Einheiten auf so dass im Falle einer nicht-Endverkappung keine festgelegte OH-Funktionalität vorliegt.

US 4,746,683 beschreibt die Verbesserung der Offenzelligkeit von hochelastischen Weichschäumen durch die Verwendung von Polyethersiloxanen, wobei die Polyether zu hohem Anteil sek. oder tert. OH-Gruppen tragen. Die Siloxane enthalten maximal 10 Si-Atome und die Polyether bestehen aus 3 bis 13 Oxyalkylen-Einheiten.

US 5,169,872 offenbart ein Verfahren zur Herstellung eines harten Polyurethan- und Polyisocyanurat-Schaumes, bei dem man (I) eine Formulierung mischt, welche (i) mindestens ein reaktives Diisocyanat, (ii) mindestens ein reaktives Polyol, (iii) mindestens einen Katalysator, (iv) ein organisches Treibmittel, (v) Wasser und (vi) einen bestimmten Polyurethanschaum-Zusatzstoff enthält, wobei dieser Zusatzstoff der allgemeinen Formel (CH₃)₃SiO{SiO(CH₃)₂}ₓ{SiO(CH₃)R}_{y}Si(CH₃)₃ genügt, in welcher R für den Rest -(CₙH₂ₙ)ₐO(CH₂CH₂O)_{w}{CH₂(CH₃)-CHO}_{z}R' steht, in dem R' ausgewählt ist aus dem Rest -(C=O)R", Wasserstoff und Alkylresten mit 1 bis 6 Kohlenstoffatomen und R", wobei R" ausgewählt ist aus Alkylresten mit 1 bis 6 Kohlenstoffatomen, und in dem n einen Wert von 3 bis 6 hat; in der x einen Wert von 27 bis 33 und y einen Wert von 3 bis 5 hat, z einen Wert von 0 oder 1 hat, und w einen Wert von 6 bis 100 hat, und in der das Verhältnis von x zu y im Bereich von 5:1 bis 12:1 liegt; wobei die Menge des organischen Treibmittels (iv) die Menge des Wassers (v) in der Ausgangsmischung nicht übersteigt, und (II) das Ausgangsgemisch reagieren und härten läßt, wodurch man harte Polyurethan- und Polyisocyanurat-Schäume mit verbessertem Systemfluß und verbessertem K-Wert erhält.

Die in diesen Schriften beschriebenen Schaumstabilisatoren bieten jedoch nicht in der vollen Bandbreite der verschiedenen Hartschaumstoff-Formulierungen die angestrebten optimalen Schaumeigenschaften und in vielen Einsatzgebieten sind Verbesserungen der Schaumstabilisatoren gegenüber dem Stand der Technik wünschenswert, um die Gebrauchseigenschaften der Hartschaumstoffe weiter zu optimieren, insbesondere hinsichtlich der Wärmeleitfähigkeit und der Schaumdefekte an der Oberfläche.

Gerade die Schaumdefekte an der Oberfläche rücken zunehmend in den Fokus der Betrachtung. Bei Kühlschränken und Metallverbundelementen (Wand-Elemente für den Bau von Gebäuden) beispielsweise, bei denen Polyurethanschaum mit Deckschichten aus Stahlblech verarbeitet wird, können sich direkt unter der Deckschicht liegende Lunker im Schaum auf der Deckschicht-Oberfläche in Form von Beulen oder Blasen abzeichnen und so dem Betrachter einen schlechten Qualitäts-Eindruck vermitteln. Neben dem optischen Eindruck leiden aber auch die physikalischen Eigenschaften unter diesen Schaumdefekten: die Deckschicht-Haftung und die Wärmedämmung verschlechtern sich in der Regel in ihren initialen Werten und können zudem auch einer verstärkten Alterung unter weiterer Verschlechterung der Werte unterliegen. Dieses Problem ist auch bei Polyurethan- bzw. Polyisocyanurat-Dämmplatten bekannt.

Das Ausmaß an oberflächennahen Schaumdefekten kann sehr effizient durch die Wahl des Schaumstabilisators beeinflusst werden. Polyethersiloxane mit sogenannten endverkappten Polyether-Seitengruppen, d.h. Polyethern, die anstelle einer OH-Gruppe eine endständige Alkylether- oder Ester-Gruppe aufweisen, sind für vergleichsweise störungsarme Oberflächenqualitäten bekannt. Leider sind diese Schaumstabilisatoren schlechter in Polyol-Formulierungen löslich als OH-funktionelle Produkte. Der Einsatz von unlöslichen Schaumstabilisatoren in vorformulierten Polyol-Systemen, wie sie insbesondere für die Einsatzgebiete Kühlschrank-Isolation und Metallverbundelemente marktüblich sind, verbietet sich durch die Gefahr einer Phasenseparation der Formulierung während längerer Lagerzeiten vor der Verarbeitung. Aus diesem Grund ist der Einsatz von vollständig endverkappten Schaumstabilisatoren zur Verbesserung der Oberflächenqualität insbesondere bei Kühlschrank-Anwendungen, aber auch in vielen anderen Anwendungsgebieten, nicht oder nur eingeschränkt möglich.

Es besteht deshalb die Aufgabe, alternative Schaumstabilisatoren bereitzustellen, die die Herstellung von Polyurethan- bzw. Polyisocyanurat-Schaumstoffen mit guter Oberflächenqualität - insbesondere wenig Lunkern und Verdichtungen im Kontaktbereich mit Deckschichten - ermöglichen, ohne einen oder mehrere der aus dem Stand der Technik bekannten Nachteile, wie z.B. schlechte Systemlöslichkeit, aufzuweisen.

Eine bevorzugte Aufgabe der Erfindung war weiterhin die Entwicklung von Polyurethan- bzw. Polyisocyanurat-Hartschaumstoffen und den ihnen zugrunde liegenden Formulierungen, welche besonders vorteilhafte Gebrauchseigenschaften, wie z. B. gute Oberflächenqualität und/oder niedrige Wärmeleitfähigkeit, bieten.

Überraschenderweise wurde nun gefunden, dass Polyethersiloxane der Formel (I), wie nachfolgend und in den Ansprüchen beschrieben, die kaum primäre sondern überwiegend sekundäre und/oder tertiäre OH-Gruppen aufweisen, eine oder mehrere der vorgenannten Aufgaben lösen. Dies war insbesondere auch deshalb überraschend, da in US 4,746,683 die Verbesserung der Offenzelligkeit von hochelastischen Weichschäumen durch die Verwendung von Polyethersiloxanen mit überwiegend sek. oder tert. OH-Gruppen beschrieben wurde, während mit Verbindungen der Formel (I) eine sehr hohe Geschlossenzelligkeit von Hartschaumstoffen erzielt wird.

Ein Gegenstand der vorliegenden Erfindung sind deshalb Polyethersiloxane der Formel (I), wie nachfolgend und in den Ansprüchen beschrieben, die kaum primäre sondern überwiegend sekundäre oder tertiäre OH-Gruppen aufweisen, und die Verwendung der erfindungsgemäßen Polyethersiloxane zur Herstellung von Polyurethanschaumstoffen und Polyisocyanuratschaumstoffen.

Ein weiterer Gegenstand der vorliegenden Erfindung ist eine Zusammensetzung, geeignet zur Herstellung von Polyurethan-oder Polyisocyanurat-Hartschaumstoffen, enthaltend zumindest eine Isocyanatkomponenten, zumindest eine Polyolkomponente, zumindest einen Schaumstabilisator, zumindest einen Urethan- und/oder Isocyanurat-Katalysator, Wasser und/oder Treibmittel, und optional zumindest ein Flammschutzmittel und/oder weitere Additive, welche dadurch gekennzeichnet ist, dass als Schaumstabilisator zumindest ein erfindungsgemäßes Polyethersiloxan enthalten ist, ein Verfahren zur Herstellung von Polyurethan- oder Polyisocyanurat-Hartschaumstoffen, durch Umsetzung dieser Zusammensetzung sowie die dadurch erhältlichen Polyurethan-oder Polyisocyanurat-Hartschaumstoffe.

Außerdem ist Gegenstand der vorliegenden Erfindung die Verwendung von erfindungsgemäßen Polyurethan- oder Polyisocyanurat-Hartschaumstoffen als Dämmplatten, Isolationsmittel und in Form von Metallverbundelementen als Konstruktionselement für den Bau von Gebäuden, Kühlräumen, Kühl-Containern und -Lastkraftwagen sowie eine Kühlapparatur, die als Isoliermaterial einen erfindungsgemäßen Polyurethan- oder Polyisocyanurat-Hartschaumstoff aufweist.

Die erfindungsgemäßen Polyethersiloxane haben den Vorteil, dass mit Ihnen Polyurethan- oder Polyisocyanuratschäume, insbesondere Hartschäume hergestellt werden können, die sich durch eine gute Feinzelligkeit und gute Isoliereigenschaften auszeichnen und gleichzeitig wenig Schaumdefekte aufweisen. Insbesondere die bei Composit-Systemen aus Hartschaumstoff mit flexiblen oder starren Deckschichten problematischen Schaumdefekte (Lunker, Verdichtungen) an der Grenzfläche zur Deckschicht lassen sich mithilfe der erfindungsgemäßen Polyethersiloxane wirksam gegenüber dem Stand der Technik minimieren.

Die erfindungsgemäßen Polyethersiloxane, Zusammensetzungen und Polyurethanschäume sowie deren Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Wenn im nachfolgenden Mittelwerte angegeben sind, so handelt es sich, wenn nicht anders angegeben, um das Zahlenmittel.

Die erfindungsgemäßen Polyethersiloxane entsprechen der Formel (I),

R¹-Si(CH₃)₂-O-[-Si(CH₃)₂-O-]n-[-Si(CH₃)R-O-]ₘ-Si(CH₃)₂- R² (I)

gemäß Anspruch 1.
R"' kann vorzugsweise
- Alkyl-Rest mit 1 bis 40, bevorzugt 1 bis 24 Kohlenstoffatomen oder
- Acyl-Rest mit 1 bis 40, vorzugsweise 1 bis 24 Kohlenstoffatomen sein.

In der Formel (I)
kann n+m+2 vorzugsweise 12 bis 100, bevorzugt 15 bis 50 und besonders bevorzugt 20 bis 40 sein.

Vorzugsweise sind in Formel (I) mindestens 50%, besonders bevorzugt 100% der Reste R"' gleich Wasserstoff, wobei von allen Polyether-Resten R, die eine Endgruppe R'''= -H besitzen, bevorzugt mindestens 70%, eine sekundäre oder tertiäre OH-Endgruppe, d.h. einen endständigen Alkylenoxid-Baustein mit R' und/oder R'' ungleich -H, aufweisen.

Die erfindungsgemäßen Polyethersiloxane der Formel (I) sind Copolymere, die herstellungsbedingt meist polydisperse Verbindungen sind, so dass hinsichtlich der Parameter n, m, x und y nur Mittelwerte angegeben werden können.

Das Verhältnis von primären zu sekundären/tertiären OH-Gruppen kann z. B. durch die bei der Herstellung verwendeten Polyether oder durch die Menge des eingesetzten Verkappungsreagenzes beeinflusst werden. Das Verhältnis von primären zu sekundären und tertiären OH-Endgruppen kann mittels NMR-Methoden bestimmt werden. Vorzugsweise erfolgt die Bestimmung wie nachfolgend beschrieben mit einem NMR-Spektrometer mit Rechnereinheit und Autosampler mit 5 mm Probenkopf der Firma Bruker, Typ 400 MHz, 10 mm QNP unter Verwendung von 5 mm Probenröhrchen und Verschlußkappen aus Plastik, beides von der Firma Norell Inc. Die Probennahme erfolgt mittels Pasteur-Pipetten der Firma Brand. Als Reagenzien werden eingesetzt: Deuterochloroform (CDCl₃) der Firma Deutro, Deuterierungsgrad 99,8 %), Molsieb A3 der Firma Merck (zur Entfernung von Wasserresten aus dem Lösemittel).

Die Messungen werden unter Verwendung der in Tabelle A angegebenen Messparameter durchgeführt:

**Tabelle A: Messparameter für NMR-Messungen**

| | ¹H NMR | ¹³C NMR |
|---|---|---|
| Probenmenge | Ca. 20 mg | Ca. 1 g |
| Volumen CDCl₃ | Ca. 1,25 ml | Ca. 5 ml |
| Senderfrequenz | 399,87 MHz | 100,565 MHz |
| Puls | 8 | 10 |
| Relaxationszeit | 0 sec. | 10 sec. |
| Transmitter Offset | 1350, 0 Hz | 11000 Hz |
| Messzeit | 16 | 512 |
| Linienbreite | 0,1 Hz | 1 Hz |

Dazu wird die angegebene Probenmenge in ein sauberes NMR-Röhrchen eingefüllt und mit dem angegebenen Volumen an CDCl₃ versetzt. Das Probenröhrchen wird mit der Plastikkappe verschlossen und die Probe durch Schütteln homogenisiert. Nachdem sich alle Luftbläschen an der Oberfläche abgesetzt haben, wird die Probe im NMR-Spektrometer vermessen. Die Zuordnung der einzelnen Signale ist dem Fachmann geläufig oder kann gegebenenfalls durch Vergleich mit den Signalen geeigneter Beispielsubstanzen erfolgen. Die Auswertung bezüglich der molaren Verhältnisse von freien OH-Gruppen (R'' = H) zu endverkappten OH-Gruppen (R'' ungleich H) erfolgt durch das ins Verhältnis setzen der entsprechenden Integrale der Signale, die den jeweiligen Gruppen zugeordnet sind. Um eine Vergleichbarkeit der Signale zu gewährleisten ist dem Fachmann bekannt, sogenannte Beschleuniger den Proben zuzusetzen. Einen geeigneten Beschleuniger kann der Fachmann durch Vermessen von Modellsubstanzen, bei denen das molare Verhältnis bekannt ist, ermitteln. Geeignete Beschleuniger sind solche, bei denen das gemessene Verhältnis vom tatsächlichen Verhältnis um maximal 5 % abweicht. Als Beschleuniger kann z.B. Chromacetylacetonat, welches in Konzentrationen von ca. 0,8 Massen-% bezogen auf die Probenmenge zugegeben wird, verwendet werden.

Es kann vorteilhaft sein, wenn sich Polyethersubstituenten in der Kammposition (seitenständig) der Siloxankette befinden (m ungleich 0). Zusätzlich sind Polyethersubstituenten an den endständigen Siliziumatomen der Siloxankette vorhanden sein (R¹ und R² = R).

Die Endgruppe der Polyether-Reste ist entweder eine freie OH-Gruppe, eine Alkylether-Gruppe (vorzugsweise Methyl) oder ein Ester, entstanden durch Veresterung der OH-Gruppe mit einer beliebigen Carbonsäure (vorzugsweise Essigsäure). Es kann vorteilhaft sein, wenn ein Teil der Reste R''' Akylreste, vorzugsweise ausschließlich Methylreste sind, erfindungswesentlich ist jedoch, dass im Mittel (Zahlenmittel, gemittelt über alle Verbindungen der Formel (I)) mindestens 25% der Polyether eine OH-Endgruppe tragen (d.h. R''' = -H) und diese OH-Gruppen überwiegend (mind. 50 %) sekundäre oder tertiäre OH-Gruppen sind.

Bei den mit dem Index y bezeichneten Alkylenoxid-Einheiten handelt es sich bevorzugt um Ethylenoxid, Propylenoxid, n-Butylenoxid, iso-Butylenoxid und Styroloxid. Der Stoffmengenanteil an Ethylenoxid beträgt mindestens 45 mol-%, besonders bevorzugt mindestens 65 mol-%.

Die Sequenz der verschiedenen Alkylenoxid-Bausteine kann - abgesehen von dem Endblock bei OH-funktionellen Polyethern - beliebig sein, d.h. sie kann entweder statistische sein, oder einem gezielten Blockaufbau unterliegen. Bei OH-funktionellen Polyether-Resten kann ein Di-Block-Aufbau, bestehend aus einem reinen Ethylenoxid-Block und dem abschließenden Endblock aus einem Alkylenoxid ungleich Ethylenoxid, besonders vorteilhaft sein.

Die Polyether in einem Molekül können untereinander gleich oder verschieden sein, sofern die Polyethermischung die obigen Definitionen erfüllt. Ferner sind auch Mischungen verschiedener Polyethersiloxane eingeschlossen, sofern entweder die Mittelwerte der Mischung in die o. g. Bereiche fallen oder eine Komponente der obigen Definition entspricht.

Besonders bevorzugte erfindungsgemäße Polyethersiloxane sind solche, bei denen im Mittel n+m+2 gleich 15 bis 100, x gleich 3 und y gleich 5 bis 25 ist und R¹ sowie R² Polyether-Reste vom Typ R sind.

Die Polyethersiloxane gemäß der vorliegenden Erfindung können prinzipiell nach den aus dem Stand der Technik bekannten Verfahren zur Herstellung von Polyethersiloxanen erhalten werden.

Die Synthese der erfindungsgemäßen Polyethersiloxane erfolgt vorzugsweise durch eine Platin-katalysierte Umsetzung von Si-H-funktionellen Siloxanen mit endständig ungesättigten Polyethern. Eine detaillierte Beschreibung findet sich in EP 1 520 870, die hiermit als Referenz eingeführt wird und zum Offenbarungsgehalt der vorliegenden Erfindung zählt. In EP 0 493 836 ist die Herstellung von Polyether-modifizierten Siloxanen dargestellt, die in Weichschäumen Verwendung finden. Weitere Beispiele zur Herstellung von entsprechenden Siloxanen sind beispielsweise in US 4,147,847 und US 4,855,379 beschrieben.

Die in dieser sogenannten Hydrosilylierungsreaktion eingesetzten Vorstufen sind ihrerseits mit Hilfe von etablierten chemischen Verfahren zugänglich:

Die Si-H-funktionellen Siloxane können durch Umsetzung von SiH-Funktion-freien Siloxanen, vorzugsweise z.B. Hexamethyldisiloxan und Decamethylcyclopentasiloxan, mit Si-H-funktionellen Siloxanen, vorzugsweise linearen Polymethylhydrogensiloxanen, wie beispielsweise HMS-993 der Firma Gelest Inc., und optional linearen α,ω-Dihydrogenpolydimethylsiloxanen, wie beispielsweise 1,1,3,3-Tetramethyldisiloxan, in einer Säure-katalysierten Äquilibrierungsreaktion erhalten werden. Die mittlere Struktur des Produktes wird dabei über das Verhältnis der eingesetzten Rohstoffe bestimmt.

Die endständig ungesättigten Polyether können durch Umsetzung von endständig ungesättigten Startalkoholen, wie vorzugsweise Allylalkohol, mit verschiedensten Alkylenoxiden erhalten werden, vorzugsweise unter alkalischer Katalyse mit beispielsweise Alkalihydroxiden oder Doppelmetallcyanid-Katalyse (DMC-Katalyse). Die Sequenz der erhaltenen Polyether wird dabei über die Dosierung der Alkylenoxide gesteuert. Block-Strukturen können dadurch erhalten werden, dass zunächst Alkylenoxid A an den Startalkohol angelagert wird und nach Erreichen eines vollständigen Umsatzes das Alkylenoxid B zudosiert und angelagert wird. Statistische Sequenzen können dadurch erhalten werden, dass die Alkylenoxide A und B im Gemisch eingesetzt werden. Sind die gewünschte Sequenz und Molmasse aufgebaut, können die Polyether gegebenenfalls entweder direkt einer wässrigen Aufarbeitung unterzogen werden, wobei Produkte mit endständiger OH-Funktion erhalten werden, oder optional einem weiteren Reaktionsschritt zur Endverkappung unterzogen werden, beispielsweise durch Umsetzung mit Methylchlorid unter Bildung einer Methylether-Endgruppe nach Williamson. So ist zum Beispiel in EP 1 360 223 und den darin zitierten Dokumenten die Herstellung von olefinischen Polyethern mit und ohne Derivatisierung der OH-Funktionalität beschrieben.

Um den erfindungsgemäßen Anteil an sekundären oder tertiären OH-Endgruppe zu erhalten, können verschiedene Methoden angewandt werden. Eine Möglichkeit besteht z. B. darin, dass bei der Herstellung der Polyether abschließend ein Block aus im Mittel 0,5 bis 5, vorzugsweise 1 bis 3 Alkylenoxid-Baustein pro Polyethermolekül mit R' und/oder R'' ungleich -H angelagert wird. Geeignete Alkylenoxide für diesen Endblock sind beispielsweise Propylenoxid, Butylenoxid, iso-Butylenoxid und Styroloxid.

Abgesehen von dem beschriebenen Endblock bei OH-funktionellen Polyethern können verschiedenste Alkylenoxide zur Herstellung der Polyether-Reste verwendet werden, bevorzugt sind Ethylenoxid, Propylenoxid, optional Butylenoxid und optional Styroloxid. Dabei sind, gemittelt über alle Polyether-Reste in allen Molekülen gemäß Formel (I), der Stoffmengenanteil an Ethylenoxid vorzugsweise mindestens 45 mol-%, besonders bevorzugt mindestens 65 %, betragen. Die Sequenz der verschiedenen Alkylenoxid-Bausteine kann - abgesehen von dem Endblock bei OH-funktionellen Polyethern - beliebig gewählt werden, d.h. sie kann entweder durch statistischen Einbau erhalten werden, oder durch einen gezielten Blockaufbau erhalten werden. Insbesondere bei den OH-funktionellen Polyether-Resten kann es vorteilhaft sein, wenn ein Di-Block-Aufbau erzielt wird, wobei zunächst ein reiner Ethylenoxid-Block erzeugt wird und anschließend der abschließende Endblock, in dem abschließend ein Alkylenoxid ungleich Ethylenoxid eingesetzt wird.

Die erfindungsgemäßen Polyethersiloxane können in allen bekannten Anwendungen, bei denen Polyethersiloxane eingesetzt werden, verwendet werden. Vorzugsweise werden die erfindungsgemäßen Polyethersiloxane zur Herstellung von Polyurethanschaumstoffen, Polyisocyanuratschaumstoffen, insbesondere zur Herstellung von Polyurethan- oder Polyisocyanurat-Hartschaumstoffen verwendet.

Die erfindungsgemäßen Zusammensetzungen (meist aufgeteilt in zwei Komponenten), die zur Herstellung von Polyurethan-oder Polyisocyanurat-Hartschaumstoffen geeignet sind, enthalten zumindest eine Isocyanatkomponenten, zumindest eine Polyolkomponente, zumindest einen Schaumstabilisator, zumindest einen Urethan- und/oder Isocyanurat-Katalysator, optional Wasser und/oder Treibmittel, und optional zumindest ein Flammschutzmittel und/oder weitere Additive, und zeichnen sich dadurch aus, dass sie als Schaumstabilisator zumindest ein erfindungsgemäßes Polyethersiloxan bzw. ein Polyethersiloxan-Gemisch, welches erfindungsgemäße Polyethersiloxane aufweist bzw. daraus besteht, enthalten. Ist die erfindungsgemäße Zusammensetzung vor der Verarbeitung in zwei oder mehr Komponenten aufgeteilt, so ist das erfindungsgemäße Polyethersiloxan bzw. Polyethersiloxan-Gemisch vorzugsweise nicht in der Komponente enthalten, die die Isocyanatkomponente enthält.

In der erfindungsgemäßen Zusammensetzung beträgt der Massenanteil an erfindungsgemäßen Polyethersiloxan (als Schaumstabilisatoren) bezogen auf 100 Massenteile Polyolkomponente (pphp) vorzugsweise von 0,1 bis 10 pphp, bevorzugt 0,5 bis 5 pphp und besonders bevorzugt bei 1 bis 3 pphp.

Als Isocyanatkomponente kann die erfindungsgemäße Zusammensetzung alle zur Herstellung von Polyurethan- oder Polyisocyanurat-Hartschaumstoffen geeigneten Isocyanatverbindungen aufweisen. Vorzugsweise weist die erfindungsgemäße Zusammensetzung ein oder mehrere organische Isocyanate mit zwei oder mehr Isocyanat-Funktionen auf, wie beispielsweise 4, 4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch.

Geeignete Polyole im Sinne dieser Erfindung können alle organischen Substanzen mit mehreren gegenüber Isocyanaten reaktiven Gruppen, sowie deren Zubereitungen sein. Bevorzugte Polyole sind alle zur Herstellung von Polyurethan-Schaumstoffen üblicherweise verwendeten Polyetherpolyole und Polyesterpolyole. Polyetherpolyole können durch Umsetzung von mehrwertigen Alkoholen oder Aminen mit Alkylenoxiden gewonnen werden. Polyesterpolyole basieren auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen).

Ein geeignetes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 80 bis 350.

Als Urethan- und/oder Isocyanurat-Katalysatoren weist die erfindungsgemäße Zusammensetzung vorzugsweise ein oder mehrere Katalysatoren für die Reaktionen Isocyanat-Polyol und/oder Isocyanat-Wasser und/oder die Di- bzw. Trimerisierung des Isocyanates auf. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat oder Zinn-II-2-ethylhexanoat und Kaliumsalze wie Kaliumacetat und Kalium-2-ethylhexanoat.

Bevorzugte in der erfindungsgemäßen Zusammensetzung vorhandene Mengen an Katalysatoren richten sich nach dem Typ des Katalysators und liegen üblicherweise im Bereich von 0,05 bis 5 pphp (= Massenteile bezogen auf 100 Massenteile Polyol) bzw. 0,1 bis 10 pphp für Kaliumsalze.

Geeignete Wasser-Gehalte im Sinne dieser Erfindung hängen davon ab, ob zusätzlich zum Wasser noch ein oder mehrere Treibmittel eingesetzt werden oder nicht. Bei rein Wasser getriebenen Schäumen liegen die Werte typischerweise bei 1 bis 20 pphp, werden zusätzlich andere Treibmittel eingesetzt, verringert sich die Einsatzmenge auf üblicherweise 0 bis 5 pphp.

Sind in der erfindungsgemäßen Zusammensetzung zusätzliche Treibmittel vorhanden, können diese physikalische oder chemische Treibmittel sein. Vorzugsweise weist die Zusammensetzung physikalische Treibmittel auf. Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 3 bis 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt 1,2-Dichlorethan.

Neben oder an Stelle von Wasser und gegebenenfalls physikalischen Treibmitteln können auch andere chemische Treibmittel eingesetzt werden, die mit Isocyanaten unter Gasentwicklung reagieren, wie beispielsweise Ameisensäure.

Als Flammschutzmittel kann die erfindungsgemäße Zusammensetzung alle bekannten und zur Herstellung von Polyurethan- oder Polyisocyanurat-Hartschaumstoffen geeigneten Flammschutzmittel aufweisen. Geeignete Flammschutzmittel im Sinne dieser Erfindung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit und Melamin, geeignet.

Das erfindungsgemäße Verfahren zur Herstellung von Polyurethan- oder Polyisocyanurat-Hartschaumstoffen, zeichnet sich dadurch aus, dass eine wie oben beschriebene, erfindungsgemäße Zusammensetzung umgesetzt wird. Eine zusammenfassende Darstellung des Stands der Technik, der verwendeten Rohstoffe und anwendbaren Verfahren findet sich in G. Oertel (Hrsg.): "Kunststoffhandbuch", Band VII, C. Hanser Verlag, München, 1983, in Houben-Weyl: "Methoden der organischen Chemie", Band E20, Thieme Verlag, Stuttgart 1987,(3), Seite 1561 bis 1757, und in "Ullmann's Encyclopedia of Industrial Chemistry" Vol. A21, VCH, Weinheim, 4. Auflage 1992, S. 665 bis 715.

Mit der erfindungsgemäßen Zusammensetzung bzw. mit dem erfindungsgemäßen Verfahren können Polyurethan- bzw. Polyisocyanurat-Hartschäume hergestellt werden.

Eine bevorzugte Zusammensetzung, insbesondere eine Polyurethan- bzw. Polyisocyanurat-Hartschaumformulierung im Sinne dieser Erfindung würde Polyurethan- bzw. Polyisocyanurat-Hartschäume mit einem Raumgewicht von 5 bis 200 kg/m³, bevorzugt von 5 bis 50 kg/m³ ergeben und hätte die folgende Zusammensetzung:

**Tabelle 1: Typische Hartschaumformulierung**

| **Komponente** | **Gewichtsanteil** |
|---|---|
| Polyol | 100 |
| Amin-Katalysator | 0, 05 bis 5 |
| Kalium-Trimerisierungskatalysator | 0 bis 10 |
| Polyethersiloxan der Formel (I) | 0, 5 bis 5 |
| Wasser | 0 bis 20 |
| Treibmittel | 0 bis 40 |
| Flammschutzmittel | 0 bis 50 |
| | |
| Isocyanat-Index: 80 bis 350 | |

Da die erfindungsgemäße Zusammensetzung, von wenigen Ausnahmen abgesehen, vor ihrer Umsetzung in zwei Komponenten aufgeteilt ist, müssen zu deren Umsetzung die Komponenten miteinander vermischt werden. Dies kann nach allen dem Fachmann geläufigen Verfahren erfolgen, beispielsweise im Handmischverfahren oder bevorzugt mit Hilfe von Nieder- bzw. Hochdruck-Verschäumungsmaschinen. Dabei können diskontinuierliche Verfahren, beispielsweise zur Produktion von Formschäumen, Kühlschränken und Paneelen, oder kontinuierliche Verfahren, beispielsweise bei Dämmplatten und Metallverbundelementen (im sogenannten Doppelband-Verfahren), bei Blöcken oder bei Sprühverfahren zum Einsatz kommen.

Ein Spezialfall stellen die 1- und 1,5-Komponenten-Dosenschäume dar. Bei dieser Anwendung wird die erfindungsgemäße Zusammensetzung bereits bei Abfüllung in eine Aerosol-Dose zur Reaktion gebracht, wobei sich aus dem Polyol, sowie allen anderen gegenüber Isocyanat reaktiven Komponenten, und dem im Überschuss vorliegenden Isocyanat ein Präpolymer bildet. Beim Gebrauch wird dieses Präpolymer mit Hilfe eines Treibgases als Schaum aus der Aerosol-Dose ausgetragen und härtet durch Nachvernetzung unter dem Einfluss von (Luft-)Feuchtigkeit aus. Auch in dieser Anwendung können die erfindungsgemäßen Polyethersiloxane als Schaumstabilisatoren eingesetzt werden.

Durch das erfindungsgemäße Verfahren sind die erfindungsgemäßen Polyurethan- oder Polyisocyanurat-Hartschaumstoffe erhältlich. Vorzugsweise enthalten die erfindungsgemäßen Polyurethan- oder Polyisocyanurat-Hartschaumstoffe 0,1 bis 10 Massenteile, bevorzugt 0,5 bis 5 Massenteile und besonders bevorzugt von 1 bis 3 Massenteile bezogen auf 100 Massenteile Polyolkomponente der erfindungsgemäßen Polyethersiloxane in gebundener und/oder ungebundener Form.

Die erfindungsgemäßen Polyurethan- oder Polyisocyanurat-Hartschaumstoffe können als oder zur Herstellung von Dämmplatten und Isolationsmittel bzw. Isoliermaterialien verwendet werden. Auf diese Weise sind Kühlapparaturen, wie z. B. Kühl- oder Gefrierschränke, zugänglich, die sich dadurch auszeichnen, dass sie als Isoliermaterial einen erfindungsgemäßen Polyurethan- oder Polyisocyanurat-Hartschaumstoff aufweisen.

Nachfolgend werden einige besonders bevorzugte Anwendungen beschrieben, ohne dass der Gegenstand der Erfindung auf diese beschränkt sein soll.

In einer bevorzugten Ausführungsform der vorliegenden Erfindung werden die erfindungsgemäßen Zusammensetzungen als PUR Formulierungen (Index kleiner 200) eingesetzt, die bei der Verschäumung in einem diskontinuierlichen Prozess in einer Form verwendet werden. Oftmals sind diese Formen so dimensioniert, dass die schäumende Mischung lange Fließwege hat und dadurch die Anfälligkeit für Schaumstörungen steigt. Hier kann bei der Verwendung der erfindungsgemäßen Zusammensetzungen die Anfälligkeit für Schaumstörungen minimiert werden.

Bevorzugt werden die erfindungsgemäßen Zusammensetzungen bei der Herstellung von Kühlschränken oder anderen Kühlaggregaten eingesetzt. Hierbei wird in einem diskontinuierlichen Prozess die schäumende Mischung in die Wandung des sogenannten Kabinetts (und separat der Tür) injiziert und muss dort den zur Verfügung stehenden Raum zwischen der äußeren Deckschicht und der inneren Deckschicht (Inliner) ausfüllen. Hierbei ist der Schaum einem Fließstress unterzogen, was die Gefahr der Fehlerbildung erhöht. Zusätzlich spielen die verwendeten Materialien eine wichtige Rolle. Der Inliner besteht meist aus Kunststoff und die Außenhülle des Kühlschranks aus einer Metalldeckschicht. Hier darf es zu keinen Schaumfehlern kommen, die aus der Wechselwirkung mit diesen Materialien oder eventuell darauf befindlichen Verschmutzungen herrühren. Die erfindungsgemäßen Zusammensetzungen zeigen hier eine überlegene Fähigkeit Schaumfehler unter diesen Bedingungen zu unterdrücken. Dadurch erhält man auch bei der Verwendung von dünnen Deckschichten, wie z. B. Metalldeckschichten und/oder Kunststoffdeckschichten, eine glatte Oberfläche des Kühlschranks, da die Neigung zur Fehlerbildung an der Grenzschicht unterdrückt ist. Die Kunststoffdeckschichten können z. B. Polypropylen, Polyethylen oder (High Impact Polystyrene) HIPS-Deckschichten sein.

In einer weiteren bevorzugten Ausführungform der vorliegenden Erfindung werden die erfindungsgemäßen Zusammensetzungen bei der Herstellung von Verbundelementen eingesetzt. Hierbei wird in einem diskontinuierlichen Prozess die zu schäumende Zusammensetzung (PUR- und PIR-Rezepturen finden Verwendung) zwischen zwei Deckschichten injiziert. Als Deckschichten kommen verschiedene Materialien in Frage. Meist sind es Metalldeckschichten zur Herstellung von Metallverbundelementen, die dann in der Bauindustrie Verwendung finden. Es können aber auch auf einer oder beiden Seiten Kunststoffdeckschichten eingesetzt werden. Die so erhaltenen Verbundelemente, oft auch Paneele genannt, können Verwendung in diversen Bereichen wie der Bauindustrie (Fassaden), im Automobilbereich (Caravanbereich), dem Messebau (Leichtbauwände) oder der Möbelherstellung finden. Besonders bei der beidseitigen Verwendung von Kunststoffdeckschichten können hierbei sehr leichte Verbundelemente hergestellt werden. Als Deckschichten können beispielsweise folgende Materialien eingesetzt werden: PMMA (Polymethylmethacrylat), HIPS (High Impact Polystyrene), PP (Polypropylen), Resopal, faserverstärkte Papier-Typen. Besondere Probleme können hier von Beschichtungen auf den Metalldeckschichten oder Prozesshilfsmitteln (Trennmittel) auf Kunststoffoberflächen ausgehen, die für die Ausbildung des Schaums nachteilig sein können. Generell zeigen hier die erfindungsgemäßen Zusammensetzungen Vorteile bei den Oberflächenqualitäten, da weniger Schaumfehler auftreten als bei Verwendung von Siloxanen nach dem bisherigen Stand der Technik. Zusätzlich zu den ästhetischen Aspekten kann auch die Haftung der Deckschichten auf dem Schaum verbessert werden.

In einer weiteren bevorzugten Ausführungsform werden die erfindungsgemäßen Zusammensetzungen (bzw. die erfindungsgemäße Polyethersiloxane) bei der kontinuierlichen Herstellung von Polyurethan oder Polyisocyanurat basierenden Metall-Paneelen verwendet. Hierbei wird in einem Doppelbandlaminator bei Bandgeschwindikeiten von maximal 25 m/min über einen traversierenden Mischkopf die schäumende Mischung auf die untere Metallschicht aufgetragen. Oftmals sind die Metalldeckschichten hierbei profiliert. Im Laminator erreicht dann die aufsteigende Mischung die obere Deckschicht wodurch ein kontinuierlich gebildetes Metallpaneel entsteht, welches am Austrittsende des Laminators in die gewünschte Länge geschnitten wird.

Hierbei muss die schäumende Mischung die oftmals profilierten Deckschichten komplett bedecken und den Raum zwischen den Deckschichten komplett ausfüllen. In den meisten Fällen wird hier die schäumende Mischung aus einem Mischkopf dosiert an dem sich eine sogenannte Giessharfe befinden kann. Mit einer Giessharfe wird die Mischung aus mehreren Öffnungen entlang der Bandrichtung ausgetragen. Um eine gleichmäßige Schaumverteilung über die Breite des Paneels zu erhalten, wird der Mischkopf traversierend über die Breite des Panels bewegt. Eine weitere Aufgabenstellung besteht hier in der Vermeidung von Oberflächendefekten, die hier von Beschichtungen auf den Metalldeckschichten (Coil Coatings) herrühren können, da diese oftmals Entschäumer enthalten, die für den Schaum bzw. die Schaumbildung schädlich sein können. Generell zeigen hier die erfindungsgemäßen Zusammensetzungen Vorteile bei den Oberflächenqualitäten, da weniger Schaumfehler auftreten als bei Verwendung von Polyethersiloxanen nach dem bisherigen Stand der Technik.

In einer weiteren bevorzugten Ausführungsform werden die erfindungsgemäßen Zusammensetzungen (Siloxane) bei der kontinuierlichen Herstellung von Polyurethan oder Polyisocyanurat basierenden Paneelen mit flexiblen Deckschichten verwendet. Hierbei wird in einem Doppelbandlaminator bei Bandgeschwindigkeiten von bis über 50 m/min über einen oder mehrere Mischköpfe die schäumende Mischung auf die untere Deckschicht aufgetragen. Im Laminator erreicht dann die aufsteigende Mischung die obere Deckschicht wodurch ein kontinuierlich gebildetes Paneel entsteht, welches am Austrittsende des Laminatores in die gewünschte Länge geschnitten wird.

Es können hierbei ein Vielzahl an verschiedenen Deckschichten eingesetzt werden, wie beispielsweise Papier, Aluminium, Bitumen, Faserfließe, Mehrschichtfolien aus diversen Materialien, etc.

Hierbei muss die schäumende Mischung aufgrund der höheren Bandgeschwindigkeiten in kurzer Zeit möglichst gleichmäßig verfließen, damit ein homogener Schaum ohne Verdichtungen und unregelmäßige Zellgrößenverteilung entstehen kann. Aufgrund der hohen Austragsmengen, die hier benötigt werden, können hierbei auch Anlagen verwendet werden mit mehr als einem Mischkopf, wobei dann die schäumende Mischung in mehreren Strängen auf den Laminator ausgetragen wird. Dieser Prozess wird auch als "finger lay down" bezeichnet.

Die sehr unterschiedlichen Materialseigenschaften der Deckschichten stellen eine zusätzliche Herausforderung dar, da hier je nach Material Probleme auftreten können, wie beispielsweise Entschäumungseffekte durch Kontaminationen auf den Deckschichten, schlechte Haftung, erhöhter Fließstress bei sehr rauen Oberflächen. Hier steht die Vermeidung von Oberflächendefekten im Vordergrund. Generell zeigen hier die erfindungsgemäßen Zusammensetzungen Vorteile bei den Oberflächenqualitäten, da weniger Schaumfehler auftreten als bei Verwendung von Polyethersiloxanen nach dem bisherigen Stand der Technik.

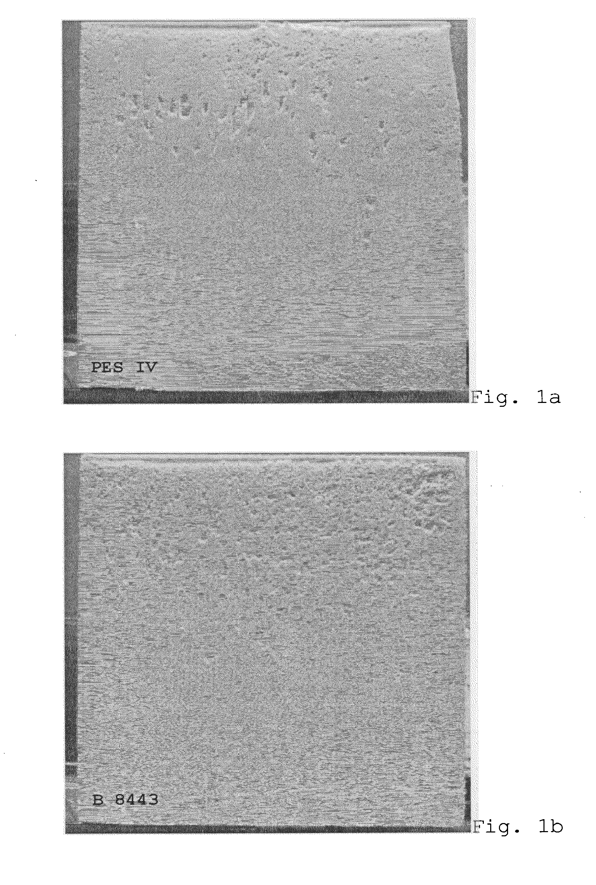

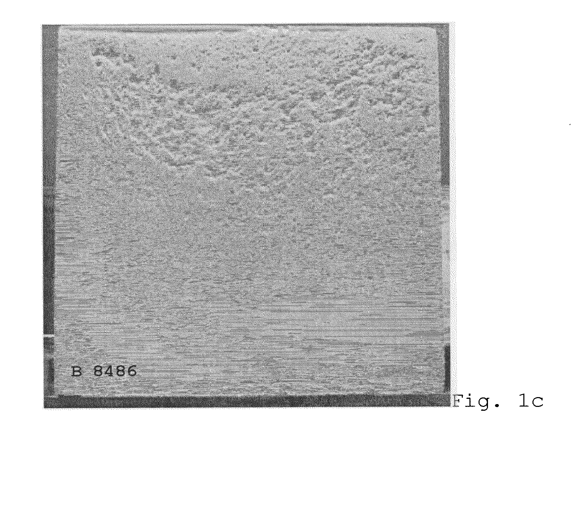

Die vorliegende Erfindung wird an Hand der Figuren näher erläutert ohne darauf beschränkt zu sein. Fig. 1a bis 1c zeigen Abbildungen von Schäumen, die unter Einsatz des erfindungsgemäßen Polyethersiloxans (Fig. 1a) bzw. unter Einsatz von Polyethersiloxanen aus dem Stand der Technik (Fig. 1b und 1c) erhalten wurden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Beispiel 1: Herstellung erfindungsgemäßer Polyethersiloxane

Es wurden die in Tabelle 2 angegebenen Polyethersiloxane hergestellt. Die Angaben in Tabelle 2 basieren auf Formel (I). Die Strukturbeschreibung der Polyether-Reste R gibt die Sequenz der enthaltenen Alkylenoxid-Bausteine entsprechend der über eine sequenzielle Dosierung der Alkylenoxide bei der Herstellung der Polyether gesteuerten Block-Abfolge an.

**Tabelle 2: hergestellte erfindungsgemäße Polyethersiloxane**

| **Bez.** | **n+m+2** | **m** | **R¹, R²** | **Polyether-Reste R** |
|---|---|---|---|---|
| PES I* | 40 | 5 | -CH₃ | - (CH₂)₃-O-(CH₂-CH₂-O)₁₀-(CH₂-CH(CH₃)-O)₂-H |
| PES II | 40 | 3 | -R | - (CH₂)₃-O-(CH₂-CH(CH₃)-O)₄-(CH₂-CH₂-O)₁₂-(CH₂-CH(CH₃)-O)₂-H |
| PES III | 40 | 3 | -R | - (CH₂)₃-O-(CH₂-CH₂-O)₁₀-(CH₂-C(CH₃)₂-O)_{1,5}-H |
| PES IV* | 60 | 8 | -CH₃ | 60 mol-% : -(CH₂)₃-O-(CH₂-CH₂-O)₁₀-(CH₂-CH(CH₃)-O)₂-H |
| | | | | 40 mol-%: -(CH₂)₃-O-(CH₂-CH₂-O)₁₂-CH₃ |
| PES V* | 30 | 3 | -CH₃ | - (CH₂)₃-O-(CH₂-CH(CH₃)-O)₄-(CH₂-CH₂-O)₁₂-(CH₂-CH (CH₃)-O)₂-H |

| | | | | |
|---|---|---|---|---|
| * nicht erfindungsgemäß | | | | |

In den folgenden Beispielen 1a bis 1c wird exemplarisch die Herstellung des Polyethersiloxans PES I beschrieben. Alle anderen Polyethersiloxane aus Tabelle 2 wurden durch Umsetzung in analogen Verfahren erhalten.

### Beispiel 1a: Synthese von PES I, Herstellung des Si-H-funktionellen Siloxans

Ein Gemisch aus 244.7 g Decamethylcyclopentasiloxan (D₅), 31.7 g Poly(methyl)wasserstoffsiloxan PTF1 (SiH-Gehalt 15.75 Val/kg) und 14.5 g Hexamethyldisiloxan (HMDS) wurde analog zu Beispiel 1 aus EP 1439200 umgesetzt (0.66 mol D₅ : 0.0104 mol PTF1 : 0.0896 mol HMDS).

### Beispiel 1b: Synthese von PES I, Herstellung des ungesättigten Polyethers

Die Herstellung des Allyl-Polyethers erfolgte analog zu der in Beispiel 1 der Schrift DE 19940797 beschriebenen Methode, wobei hier 58.0 g (1 mol) Allylalkohol als Starter und 7.0 g (0.1 mol) Kaliummethylat vorgelegt wurden, 440.5 g (10 mol) Ethylenoxid und nach dem vollständigen Abreagieren weitere 116.2 g (2 mol) Propylenoxid zudosiert wurden. Zur Aufarbeitung wurde analog zu Beispiel 1 aus DE 19940797 verfahren.

### Beispiel 1c: Synthese von PES I, Hydrosilylierung

Die Hydrosilylierungsreaktion (Umsetzungen des Si-H-funktionellen Siloxans mit den Allylpolyethern) wurde entsprechend dem Beispiel 1 in der Schrift EP 1 520 870 durchgeführt. Dazu wurden 291.0 g (0.1 mol) des Siloxans aus Beispiel 1a mit 430.3 g (0.7 mol) des Polyethers aus Beispiel 1b umgesetzt.

### Beispiel 2: Anwendungs-Beispiele

Die anwendungstechnischen Vorteile gegenüber dem Stand der Technik, die der Einsatz der erfindungsgemäßen Polyethersiloxane in Hartschaum-Formulierungen ermöglicht, werden im Folgenden anhand von Anwendungsbeispielen aufgezeigt.

Die Durchführung der Vergleichsverschäumungen erfolgte im Handmischverfahren. Dazu wurden Polyol, Flammschutzmittel, Katalysatoren, Wasser, konventioneller bzw. erfindungsgemäßer Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine thermostatisierte Aluminiumform überführt, welche mit Polyethylenfolie ausgekleidet war. Formtemperatur und Geometrie variierten dabei je nach Schaumformulierung. Die Einsatzmenge an Schaumformulierung war dabei so bemessen, dass sie um 15 % über der zur Mindestbefüllung der Form notwendigen Menge lag.

Einen Tag nach der Verschäumung wurden die Schaumstoffe analysiert. Oberfläche und Innenstörungen wurden subjektiv anhand einer Skala von 1 bis 10 beurteilt, wobei 10 einen ungestörten Schaum und 1 einen extrem stark gestörten Schaum repräsentiert. Die Porenstruktur (mittlere Zahl der Zellen pro 1 cm) wurde auf einer Schnittfläche optisch durch Vergleich mit Vergleichsschäumen beurteilt. Die Wärmeleitzahl wurde an 2,5 cm dicken Scheiben mit einem Gerät vom Typ Hesto Lambda Control bei Temperaturen an Probenunter- und -oberseite von 10 °C und 36 °C gemessen. Der prozentuale Volumenanteil an geschlossenen Zellen wurde mit einem Gerät vom Typ AccuPyc 1330 der Firma Micromeritics bestimmt. Die Stauchhärten der Schaumstoffe wurden an würfelförmigen Probekörpern mit 5 cm Kantenlänge nach DIN 53421 bis zu einer Stauchung von 10 % gemessen (angegeben ist die in diesem Messbereich maximal aufgetretene Druckspannung).

### Beispiel 2a: PUR-Hartschaumsystem für Isolation von Kühlmöbeln

Es wurde eine für dieses Einsatzgebiet abgestimmte Formulierung verwendet (siehe Tabelle 3), die jeweils mit drei erfindungsgemäßen Polyethersiloxan-Schaumstabilisatoren (PES I, PES II und PES III) und zwei nicht erfindungsgemäßen Polyethersiloxan-Schaumstabilisatoren (Tegostab B 1048, ein ausschließlich Butylverkapptes Polyethersiloxan ohne freie OH-Gruppen, und Tegostab B 8408, ein OH-funktionelles Polyethersiloxan mit über 60% primären OH-Gruppen, beide von der Firma Evonik Goldschmidt GmbH) verschäumt wurde. Dabei wurde die Reaktionsmischung in eine auf 45 °C thermostatisierte Aluminiumform von 145 cm x 14,5 cm x 3,5 cm Größe eingetragen.

**Tabelle 3: Formulierung zu Beispiel 2a**

| **Komponente** | **Gewichtsanteil** |
|---|---|
| Daltolac R 471* | 100 Teile |
| N,N-Dimethylcyclohexylamin | 1, 5 Teile |
| Wasser | 2, 6 Teile |
| cyclo-Pentan | 13,1 Teile |
| Polyethersiloxan | 1,5 Teile |
| | |
| Desmodur 44V20L** | 198,5 Teile |

| | |
|---|---|
| * Polyetherpolyol der Firma Huntsman ** polymeres MDI der Firma Bayer, 200 mPa*s, 31,5 Gew.-% NCO, Funktionalität 2,7 | |

Die in Tabelle 4 dargestellten Ergebnisse zeigen, dass die erfindungsgemäßen Polyethersiloxane durchweg zu Hartschäumen führen, die niedrigere Wärmeleitfähigkeiten aufweisen als solche, bei denen die Polyethersiloxane gemäß dem Stand der Technik eingesetzt wurden.. Bei PES II und PES III ist außerdem die Schaumoberfläche weniger stark gestört als bei den Vergleichsstabilisatoren.

**Tabelle 4: Ergebnisse zu Kühlschrank-Isolation**

| **Stabilisator** | **Defekte oben/unten/innen (1-10)** | **Zellen /cm** | **λ-Wert [mW/m*K]** | **Geschlossenzelligkeit [%]** |
|---|---|---|---|---|
| PES I* | 7/6/6 | 40-44 | 22,1 | 94 |
| PES II | 8/7/6 | 40-44 | 22,3 | 91 |
| PES III | 8/7/6 | 40-44 | 22,2 | 90 |
| B 1048* | 7/6/6 | 35-39 | 22,7 | 92 |
| B 8408* | 7/6/5 | 35-39 | 23,2 | 89 |

| | | | | |
|---|---|---|---|---|
| * nicht erfindungsgemäße Vergleichsbeispiele; TEGOSTAB B 1048 und TEGOSTAB B 8408 sind Polyethersiloxan-Schaumstabilisatoren der Firma Evonik Goldschmidt GmbH | | | | |

### Beispiel 2b: PUR-Hartschaumsystem für Metallverbundelemente

Es wurde eine für dieses Einsatzgebiet abgestimmte Formulierung verwendet (siehe Tabelle 5), die jeweils mit einem erfindungsgemäßen Polyethersiloxan-Schaumstabilisator (PES IV) und zwei nicht erfindungsgemäßen Polyethersiloxan-Schaumstabilisatoren (Tegostab B 8443, ein vollständig endverkapptes Polyethersiloxan ohne freie OH-Gruppen, und Tegostab B 8486, ein OH-funktionelles Polyethersiloxan mit ausschließlich primären OH-Gruppen, beide von der Firma Evonik Goldschmidt GmbH) verschäumt wurde. Dabei wurde die Reaktionsmischung in eine auf 40 °C thermostatisierte Aluminiumform von 50 cm x 50 cm x 5 cm Größe eingetragen, in die zuvor auf den Boden eine Stahlblech-Deckschicht eingelegt wurde. Am Folgetag wurde das Blech vom Schaum abgezogen und der Schaum anschließend beurteilt.

**Tabelle 5: Formulierungen zu Metallverbundelement**

| **Komponente** | **Gewichtsanteil** |
|---|---|
| Polyetherpolyol-Blend | 70 Teile |
| Tris(1-chlor-2-propyl)phosphat | 30 Teile |
| N,N,N',N",N"-Pentamethyldiethylentriamin | 0, 2 Teile |
| N,N-Dimethylcyclohexylamin | 2,0 Teile |
| Wasser | 2,5 Teile |
| n-Pentan | 6,0 Teile |
| Polyethersiloxan | 2,0 Teile |
| | |
| Desmodur 44V20L** | 140 Teile |

| | |
|---|---|
| ** polymeres MDI der Firma Bayer, 200 mPa*s, 31,5 Gew.-% NCO, Funktionalität 2,7 | |

Die in Tabelle 6 dargestellten Ergebnisse zeigen, dass das Polyethersiloxane PES IV wiederum niedrigere Wärmeleitfähigkeiten bietet, als die beiden anderen nicht erfindungsgemäßen Vergleichs-Stabilisatoren. Nach dem Abziehen der Stahlblech-Deckschicht von der Schaumunterseite werden die darunterliegenden Schaumdefekte sichtbar. Fig. 1a zeigt eine Aufnahme der Oberfläche, die unter Einsatz des Polyethersiloxans PES IV erhaltenen wurde. Die Fig. 1b und 1c zeigen Aufnahmen der Oberflächen, die unter Einsatz der nicht erfindungsgemäßen Polyethersiloxans B 8443 (Fig. 1b) bzw. B 8486 (Fig. 1c) erhaltenen wurden.

Das Polyethersiloxan PES IV zeigt eine deutliche Reduktion der Lunkerbildung und bietet folglich eine bessere Oberflächenqualität als die Vergleichsprodukte.

**Tabelle 6: Ergebnisse zu Metallverbundelement**

| **Stabilisator** | **Defekte oben/unten/innen (1-10)** | **Zellen/cm** | **λ-Wert [mW/m*K]** | **Geschlossenzelligkeit[%]** |
|---|---|---|---|---|
| PES IV* | 7/**/8 | 45-50 | 22,0 | 91 |
| B 8443* | 7/**/8 | 45-50 | 22,3 | 94 |
| B 8486* | 7/**/7 | 40-44 | 23,0 | 93 |

| | | | | |
|---|---|---|---|---|
| * nicht erfindungsgemäße Vergleichsbeispiele; TEGOSTAB B 8443 und TEGOSTAB B 8486 sind Polyethersiloxan-Schaumstabilisatoren der Firma Evonik Goldschmidt GmbH ** die Schaumqualität der Unterseite nach abziehen des Blechs zeigen Fig. 1a bis 1c. | | | | |

### Beispiel 2c: PIR-Hartschaumsystem für Dämmplatte

Es wurde eine für dieses Einsatzgebiet abgestimmte Formulierung verwendet (siehe Tabelle 7), die jeweils mit einem Polyethersiloxan-Schaumstabilisator (PES V) und zwei nicht erfindungsgemäßen Polyethersiloxan-Schaumstabilisatoren (Tegostab B 1048, ein ausschließlich Butylverkapptes Polyethersiloxan ohne freie OH-Gruppen und Tegostab B 8466, ein OH-funktionelles Polyethersiloxan mit ausschließlich primären OH-Gruppen, beide von der Firma Evonik Goldschmidt GmbH) verschäumt wurde. Dabei wurde die Reaktionsmischung in eine auf 50 °C thermostatisierte Aluminiumform von 50 cm x 25 cm x 5 cm Größe eingetragen.

**Tabelle 7: Formulierungen zu Dämmplatte**

| **Komponente** | **Gewichtsanteil** |
|---|---|
| Stepanpol PS 2352* | 100 Teile |
| Tris(1-chlor-2-propyl)phosphat | 15 Teile |
| N,N,N',N",N"-Pentamethyldiethylentriamin | 0, 2 Teile |
| Kaliumoctoat (75 Gew.-% in Diethylenglycol) | 4,0 Teile |
| Wasser | 0, 4 Teile |
| n-Pentan | 20 Teile |
| Polyethersiloxan | 2,0 Teile |
| | |
| Desmodur 44V20L** | 200 Teile |

| | |
|---|---|
| * Polyesterpolyol der Firma Stepan ** polymeres MDI der Firma Bayer, 200 mPa*s, 31,5 Gew.-% NCO, Funktionalität 2,7 | |

Die in Tabelle 8 dargestellten Ergebnisse zeigen abermals, dass die unter Einsatz des Polyethersiloxans PES V hergestellten Schäume niedrigere Wärmeleitfähigkeiten und eine bessere Schaumqualität an der Unterseite aufweisen als die unter Verwendung der beiden nicht erfindungsgemäßen Vergleichsprodukte erhaltenen Schäume.

**Tabelle 8: Ergebnisse zu Dämmplatte**

| **Stabilisator** | **Defekte oben/unten/innen(1-10)** | **Zellen /cm** | **λ-Wert [mW/m*K]** | **Geschlossenzelligkeit [%]** |
|---|---|---|---|---|
| PES V* | 6/8/8 | 45-50 | 22,5 | 94 |
| B 1048* | 6/7/8 | 45-50 | 23,0 | 92 |
| B 8466* | 6/7/8 | 45-50 | 22,8 | 94 |

| | | | | |
|---|---|---|---|---|
| * nicht erfindungsgemäße Vergleichsbeispiele; TEGOSTAB B 1048 und TEGOSTAB B 8466 sind Polyethersiloxan-Schaumstabilisatoren der Firma Evonik Goldschmidt GmbH | | | | |

## Patentansprüche

1. Polyethersiloxane der Formel (I),
R¹-Si(CH₃)₂-O-[-Si(CH₃)₂-O-]ₙ-[-Si(CH₃)R-O-]ₘ-Si(CH₃)₂-R² (I)
mit
R, R¹ und R² gleich oder verschieden,
R gleich oder verschieden - (CH₂)ₓ-O-(CH₂-CR'R"-O)_{y}-R''', R', R" gleich oder verschieden -H, -CH₃, -CH₂CH₃, oder Phenyl-Rest,
R"' = -H, -Alkyl- oder -Acyl-Rest,
R¹ und R² gleich R,
wobei die Alkylenoxid-Bausteine (CH₂-CR'R'-O) innerhalb eines Polyether-Restes R gleich oder unterschiedlich sein können und die Polyether-Reste R innerhalb eines Polyethersiloxan-Moleküls der Formel (I) gleich oder unterschiedlich sein können, **dadurch gekennzeichnet, dass** im Mittel, Zahlenmittel, gemittelt über alle Verbindungen der Formel (I),
n+m+2 = >10 bis 200,
m = 0 bis 40,
x = 2 bis 10,
y = 1 bis 50,
mindestens 25% der Reste R''' gleich Wasserstoff sind und unter allen Polyether-Resten R, die eine Endgruppe R''' = - H besitzen, mindestens 50% eine sekundäre oder tertiäre OH-Endgruppe aufweisen und wobei im Mittel, Zahlenmittel, gemittelt über alle Verbindungen der Formel (I), mindestens 45 mol-% der Alkylenoxid-Bausteine (CH₂-CR'R'-O) Ethylenoxid (R' = R" = -H) sind, wobei die enthaltenen Polyether-Reste R mit R''' gleich Wasserstoff und der dadurch vorhandenen OH-Gruppe gleich einer sekundären oder tertiären OH-Gruppe, einen Endblock aus Alkylenoxid-Bausteinen mit R' und/oder R'' ungleich -H aufweisen, der durch abschließende Anlagerung von im Mittel 0,5 bis 5 Alkylenoxid-Bausteinen pro Polyethermolekül mit R' und/oder R" ungleich -H erhalten wurde.

2. Polyethersiloxane gemäß Anspruch 1, **dadurch gekennzeichnet, dass** die enthaltenen Polyether-Reste R mit R'''= -H und einem Endblock aus Alkylenoxid-Baustein mit R' und/oder R'' ungleich -H im übrigen nur aus Ethylenoxid (R' = R" = -H) aufgebaut sind.

3. Polyethersiloxane nach Anspruch 1 oder 2, **dadurch gekennzeichnet, dass** im Mittel n+m+2 = 15 bis 100, x = 3 und y = 5 bis 25 ist und R¹ sowie R² Polyether-Reste vom Typ R sind.

4. Verwendung von Polyethersiloxanen gemäß einem der Ansprüche 1 bis 3, zur Herstellung von Polyurethanschaumstoffen, Polyisocyanuratschaumstoffen und kompakten, nicht-zellularen Polyurethanen.

5. Zusammensetzung, geeignet zur Herstellung von Polyurethan- oder Polyisocyanurat-Hartschaumstoffen, enthaltend zumindest eine Isocyanatkomponente, zumindest eine Polyolkomponente, zumindest einen Schaumstabilisator, zumindest einen Urethan- und/oder Isocyanurat-Katalysator, Wasser und/oder Treibmittel, und optional zumindest ein Flammschutzmittel und/oder weitere Additive, **dadurch gekennzeichnet, dass** als Schaumstabilisator zumindest ein Polyethersiloxan gemäß zumindest einem der Ansprüche 1 bis 3 enthalten ist.

6. Verfahren zur Herstellung von Polyurethan- oder Polyisocyanurat-Hartschaumstoffen, durch Umsetzung einer Zusammensetzung gemäß Anspruch 5.

7. Polyurethan- oder Polyisocyanurat-Hartschaumstoffe, erhältlich durch ein Verfahren gemäß Anspruch 6.

8. Polyurethan- oder Polyisocyanurat-Hartschaumstoffe gemäß Anspruch 7, **dadurch gekennzeichnet, dass** sie von 0,1 bis 10 Massenteile eines Schaumstabilisators nach mindestens einem der Ansprüche 1 bis 3 bezogen auf 100 Massenteile Polyolkomponente enthalten.

9. Verwendung von Polyurethan- oder Polyisocyanurat-Hartschaumstoffen gemäß Anspruch 7 oder 8 als Dämmplatten und Isolationsmittel.

10. Kühlapparatur, die als Isoliermaterial einen Polyurethan- oder Polyisocyanurat-Hartschaumstoff gemäß einem der Ansprüche 7 und 8 aufweist.

## Claims

1. Polyether siloxanes of formula (I),
R¹-Si(CH₃)₂-O-[-Si(CH₃)₂-O-]ₙ-[-Si(CH₃)R-O-]ₘ-Si(CH₃)₂-R² (I)
where
R, R¹ and R² are the same or different,
R in each occurrence is the same or different and represents -(CH₂)₂-O-(CH₂-CR'R"-O)_{y}-R"',
R' and R" are the same or different and each represent -H, -CH₃, -CH₂CH₃ or phenyl,
R"' represents -H, alkyl or acyl,
R¹ and R² each represent R,
wherein the alkylene oxide units (CH₂-CR'R"-O) within a polyether residue R can be the same or different and the polyether residues R within a polyether siloxane molecule of formula (I) can be the same or different, **characterized in that** on average, number average, averaged over all compounds of formula (I),
n + m + 2 = > 10 to 200,
m = 0 to 40
x = 2 to 10,
y = 1 to 50,
at least 25% of the R"' radicals represent hydrogen and at least 50% of all polyether residues R which have an end group R"' = -H have a secondary or tertiary OH end group and wherein on average, number average, averaged over all compounds of formula (I), at least 45 mol% of the alkylene oxide units (CH₂-CR'R"-O) are ethylene oxide (R' = R" = -H), wherein the polyether residues R present where R"' represents hydrogen and the OH group present as a result is a secondary or tertiary OH group include an endblock of alkylene oxide units where R' and/or R" is other than -H and which was obtained by final addition of on average 0.5 to 5 alkylene oxide units per polyether molecule where R' and/or R" is other than -H.

2. Polyether siloxanes according to Claim 1, **characterized in that** the polyether residues R present where R"' = -H and having an endblock of alkylene oxide unit with R' and/or R" other than - H are otherwise only constructed from ethylene oxide (R' = R" = -H).

3. Polyether siloxanes according to Claim 1 or 2, **characterized in that** on average n + m + 2 = 15 to 100, x = 3 and y = 5 to 25 and both R¹ and R² are polyether residues of the R type.

4. Use of polyether siloxanes according to any one of Claims 1 to 3 for production of polyurethane foams, polyisocyanurate foams and compact, noncellular polyurethanes.

5. Composition suitable for producing rigid polyurethane or polyisocyanurate foams, containing at least one isocyanate component, at least one polyol component, at least one foam stabilizer, at least one urethane and/or isocyanurate catalyst, water and/or blowing agent, and optionally at least one flame retardant and/or further additives, **characterized in that** at least one polyether siloxane according to at least one of Claims 1 to 3 is present as foam stabilizer.

6. Process for producing rigid polyurethane or polyisocyanurate foams, by reacting a composition according to Claim 5.

7. Rigid polyurethane or polyisocyanurate foams obtainable by a process according to Claim 6.

8. Rigid polyurethane or polyisocyanurate foams according to Claim 7, **characterized in that** they contain from 0.1 to 10 parts by mass of a foam stabilizer according to at least one of Claims 1 to 3 based on 100 parts by mass of polyol component.

9. Use of rigid polyurethane or polyisocyanurate foams according to Claim 7 or 8 as insulation boards and insulants.

10. Cooling apparatus including a rigid polyurethane or polyisocyanurate foam according to either of Claims 7 and 8 as insulating material.

## Revendications

1. Polyéthersiloxanes de formule (I),
R¹-Si(CH₃)₂-O-[-Si(CH₃)₂-O-]ₙ-[-Si(CH₃)R-O-]ₘ-Si(CH₃)₂-R² (I)
où
R, R¹ et R² sont identiques ou différents,
R, le même ou différent, représente
-(CH₂)ₓ-O-(CH₂-CR'R"-O)_{y}-R"',
R', R", identiques ou différents, représentent -H,
-CH₃, -CH₂CH₃, ou le radical phényle,
R"' = -H, un radical -alkyle ou -acyle,
R¹ et R² sont identiques à R,
les éléments constitutifs oxyde d'alkylène (CH₂-CR'R"-O) à l'intérieur d'un radical polyéther R pouvant être identiques ou différents et les radicaux polyéther R à l'intérieur d'une molécule de polyéthersiloxane de formule (I) pouvant être identiques ou différents, **caractérisés en ce qu'**en moyenne, moyenne en nombre, calculée sur tous les composés de formule (I),
n+m+2 = >10 à 200,
m = 0 à 40,
x = 2 à 10,
y = 1 à 50,
au moins 25 % des radicaux R"' représentant un atome d'hydrogène et parmi tous les radicaux polyéther R qui possèdent un groupe terminal R'" = -H, au moins 50 % comportent un groupe terminal OH secondaire ou tertiaire, et en moyenne, moyenne en nombre, calculée sur tous les composés de formule (I), au moins 45 % en moles des éléments constitutifs oxyde d'alkylène (CH₂-CR'R"-O) sont de groupes oxyde d'éthylène (R' = R" = -H), les radicaux polyéther R contenus avec R"' représentant un atome d'hydrogène et le groupe OH ainsi présent étant un groupe OH secondaire ou tertiaire, comportent un bloc terminal constitué d'éléments constitutifs oxyde d'alkylène où R' et/ou R" est/sont différent(s) de -H, qui a été obtenu par fixation par addition finale d'en moyenne 0,5 à 5 éléments constitutifs oxyde d'alkylène par molécule de polyéther, où R' et/ou R" est/sont différent(s) de -H.

2. Polyéthersiloxanes selon la revendication 1, **caractérisés en ce que** les radicaux polyéther R contenus, avec R"' = -H et un bloc terminal consistant en élément constitutif oxyde d'alkylène où R' et/ou R" est/sont différent(s) de -H, ne sont pour le reste constitués que d'oxyde d'éthylène (R' = R" = -H).

3. Polyéthersiloxanes selon la revendication 1 ou 2, **caractérisés en ce qu'**en moyenne n+m+2 = 15 à 100, x = 3 et y = 5 à 25 et R¹ ainsi que R² sont des radicaux polyéther du type R.

4. Utilisation de polyéthersiloxanes selon l'une quelconque des revendications 1 à 3, pour la production de mousses de polyuréthane, mousses de polyisocyanurate et polyuréthanes compacts, non cellulaires.

5. Composition, appropriée à la production de mousses rigides de polyuréthane ou polyisocyanurate, contenant au moins un composant isocyanate, au moins un composant polyol, au moins un stabilisant de mousse, au moins un catalyseur d'uréthane et/ou un catalyseur d'isocyanurate, de l'eau et/ou un agent porogène, et en option au moins un agent ignifuge et/ou d'autres additifs, **caractérisée en ce qu'**en tant que stabilisant de mousse est contenu au moins un polyéthersiloxane selon au moins l'une quelconque des revendications 1 à 3.

6. Procédé pour la production de mousses rigides de polyuréthane ou polyisocyanurate, par mise en réaction d'une composition selon la revendication 5.

7. Mousses rigides de polyuréthane ou polyisocyanurate, pouvant être obtenues par un procédé selon la revendication 6.

8. Mousses rigides de polyuréthane ou polyisocyanurate selon la revendication 7, **caractérisées en ce qu'**elles contiennent de 0,1 à 10 parties en masse d'un stabilisant de mousse selon au moins l'une quelconque des revendications 1 à 3, par rapport à 100 parties en masse de composant polyol.

9. Utilisation de mousses rigides de polyuréthane ou polyisocyanurate selon la revendication 7 ou 8, en tant que panneaux isolants et moyens d'isolation.

10. Appareil frigorifique, qui comporte comme matériau d'isolation une mousse rigide de polyuréthane ou polyisocyanurate selon l'une quelconque des revendications 7 et 8.
